# EUROPEAN PATENT SPECIFICATION

(11) **EP 1 451 244 B1**
(45) Date of publication and mention of the grant of the patent: **04.10.2006**
(21) Application number: 02783287.2
(22) Date of filing: 06.12.2002
(51) Int. Cl.: C08J 5/00, C08J 5/04, C08J 5/06, C08L 21/00

(54) **A METHOD AND COMPOSITION FOR BONDING FIBRES TO RUBBERS**
VERFAHREN UND ZUSAMMENSETZUNG ZUR BINDUNG VON FASERN AN GUMMI
PROCEDE ET COMPOSITION PERMETTANT DE LIER DES FIBRES A DES CAOUTCHOUCS

(30) Priority: 07.12.2001 GB 0129368
(43) Date of publication of application: 01.09.2004
(73) Proprietor: Thomas Swan & Co. Ltd., County Durham DH8 7ND (GB)
(72) Inventor: RUTHERFORD, James, Anthony, Thomas Swan & Co. Ltd, County Durham DH8 7ND (GB); RICHARDSON, Frank, Barnett Thomas Swan & Co. Ltd, County Durham DH8 7ND (GB)
(74) Representative: Atkinson, Jonathan David Mark
(86) International application number: PCT/GB2002/005519
(87) International publication number: WO 2003/048237

(56) References cited:
- WO-A-01/68784
- US-A- 5 077 127
- US-A- 5 371 153

## Description

This invention relates to a method involving novel compositions that is suitable for the bonding of fibres to rubber, and more particularly, though not exclusively, to the bonding of aramid fibres to hydrogenated nitrile rubber (HNBR).

Fibre reinforcements, be they in the physical form of chopped fibres, cords, woven fabrics, fabric mats and so on, have long been used as a means of improving the physicomechanical properties of elastomers and hence also the composite articles constructed in that manner.

A general trend in the preparation of composite materials and articles has been the imposition of increasingly greater demands on the role of the fibre reinforcement.

This in turn has placed an increasing emphasis on the need for excellent bond strengths between the fibre and the elastomer, not only at room temperature but also commonly at elevated temperature. This latter requirement is the case for composite articles that find service in aggressive environments such as vehicle engine bays.

There has been a recent trend in increasing engine-compartment operating temperatures, partly as a result of a reduction in size of engine compartments and also as a result of exploiting higher engine operating temperatures as a means of achieving reduced exhaust emissions.

These factors have led to a real need for improved fibre-to-rubber bonding as used in composite articles such as power transmission belts, which need to maintain excellent performance over a range of operating temperatures.

As the service environment of the composite becomes more aggressive, the use of aramid fibre and hydrogenated nitrile rubber becomes increasingly attractive. In the main this is due to the excellent chemical and physicomechanical properties of these two components. However, it is well known that these two substrates are not easily bonded together and so various attempts have been made using resorcinol-formalin-latex (RFL) based treatments to improve the bond strength between the fibre and the elastomer. Similar approaches have also been made for other combinations of fibre and elastomer.

Typically these involve the use of "primer" treatments for the fibres, such as epoxies or polyisocyanates, which are applied prior to the "RFL" treatment itself and may be followed by a "cement" treatment to improve further the bonding to the rubber. Alternatively a two- or three-step "repeated RFL" application can be used to some effect as in US 4,409,055, US 5,306,369 and US 5,728,245.

This invention describes a treatment process for reinforcement fibres, whatever their form, which, when combined with elastomers, results in a composite material with outstanding fibre to rubber bonding characteristics. It is particularly suitable for the bonding of aramid fibre to HNBR elastomer, though it is also suitable for other fibres such as polyester and nylon and other elastomers, both synthetic and natural, such as styrene butadiene rubber or Standard Malaysian rubber, for example.

According to a first aspect of the present invention, there is provided a method for the bonding of fibres to rubber comprising the steps of:
(a) treating the fibres with a primer;
(b) treating the fibres with a resorcinol/formalin/latex preparation;
(c) curing the rubber in intimate contact with the treated fibres,
wherein the primer comprises a ring-opened, maleinised polybutadiene and a phenolic derivative comprising electron-withdrawing groups.

According to a second aspect of the present invention, there is provided a primer which comprises a ring-opened, maleinised polybutadiene and a phenolic derivative comprising electron-withdrawing groups.

According to a third aspect of the present invention, there is provided a composition which comprises a primer according to the second aspect of the invention in combination with a resorcinol/formalin/latex preparation.

The fibre treatment process comprises a primer, which can be used separately prior to the RFL treatment, or as a bonding promoter in the RFL preparation itself, followed by an optional cement treatment. The primer treatment can be in the form of an aqueous or an organic solution and is comprised of a novel combination of compounds that afford synergistic properties as a primer (or RFL bonding promoter additive).

The first of the two primer components consists of a ring-opened, maleinised polybutadiene (PBD), the second being a phenolic derivative comprising electron-withdrawing groups. Prior art literature such as US 5,077,127, US 5,300,569 and US 5,521,248 contains examples of the use of these families of bonding promoters individually as rubber-compounding additives, but not as a combination to form a primer, as in the present invention. It has been demonstrated that the bonding potential of this combination is superior to that of each individual component.

Precisely why the bonding potential of the combined primer components is superior to that of each individual component is unknown. It is possible that the two primer components work synergistically. Alternatively, it is possible that the primer components form a complex or indeed react to generate another chemical species.

The maleinised PBDs are preferably ring-opened by an alcohol to yield half-ester derivatives, although hydrolysis to form a diacid using water is possible. Examples of the PBD component include the isobutyl half-ester derivative of maleic anhydride adducts of PBD. The preparation of such derivatives is standard in the art, and can be found in US 5,300,569.

In aqueous form it is possible to form the PBD derivative as an aqueous solution, preferably in distilled (deionised) water, for example using a suitable alkaline hydroxide solution as the solvent. It may be preferable to make the solution with ammoniated or aminated water as the solvent, for example using ammonia, triethylamine or ethanolamine. The solution should be made to a concentration so that the viscosity is of such a consistency to allow ease of handling in a manner preferred by the user, and may for example be in the range 5 and 50 wt%. Thus, a less viscous solution would be more suited to dipping whilst a more concentrated solution would be more suited to application by brushing.

In organic solution it is preferable to use solvents such as toluene, xylene or benzene, perhaps in combination with polar solvents such as acetone or methyl ethyl ketone, to achieve a solution concentration of the polybutadiene derivative that satisfies the particular viscosity requirements of interest to the user, as described above.

The phenolic derivatives comprise electron-withdrawing groups, and are preferably halogenated. Examples of the phenolic derivative include 4-chlorophenol and 4-bromophenol, together with the resorcinol/formaldehyde and ethoxylated resorcinol/formaldehyde condensates of said substituted phenols, for example Casabond E (manufactured by Thomas Swan & Co., UK). This illustrates the fact that the nature of the phenolic derivative (chemical structure and RMM) can vary appreciably and it is not limited to a simple class of compounds.

It is possible to form the phenolic derivatives described above in the form of an aqueous solution, preferably in distilled (deionised) water, through the formation of the alkaline metal salt using a suitable alkaline hydroxide solution. It is preferable to form the quaternary salt of the phenolic derivative via dissolution in ammoniated or aminated water, examples of which include ammonia, triethylamine and ethanolamine.

It is recommended to make the solution of the phenolic derivative to a concentration of between 5 and 50 % although it is more preferable to make the solution concentration in the range 10 and 30% by weight.

It is preferable to prepare the primer with a weight ratio of ring-opened, maleinised polybutadiene to phenolic derivative comprising electron-withdrawing groups in the range 1:19 to 19:1.

The second treatment is composed of a resorcinolformaldehyde-latex condensate (RFL).

The preparation of such RFL's is well known in the art. However, it is useful to state that it is standard practice to prepare such an RFL through the reaction of resorcinol and formaldehyde in the ratio of 1.0:1.2 to 1.0:2.0, carried out in an aqueous solution of sodium hydroxide. This is followed by the addition of a controlled amount of latex such that the ratio of RF resin to latex is normally in the range 15-20 parts resin to 100 parts latex, the choice of latex being determined largely by the elastomer the treated fibre is to be bonded to.

As stated earlier the primer treatment can be used as a separate treatment step to the RFL treatment step. Alternatively, the primer can be used as an additive to the RFL thereby reducing the total number of dipping stages for the fibres. The RFL treatment can be repeated one or more times if desired.

Following the RFL treatment stage, whether or not it contains a primer additive, it is optional to treat the fibres with a final, cement treatment. Cement treatment is standard in the art, and the method disclosed in EP0353473, for example, is particularly suitable. The cement may be composed of an organic solution, preferably in a polar solvent such as methyl ethyl ketone, containing a blend of a blocked isocyanate and a chlorinated rubber. An example of the blocked isocyanate includes butanone oxime blocked oligomeric 4,4'-diisocyanatodiphenyl methane; examples of the chlorinated rubber include Pergut S10, a chlorinated polyisoprene manufactured by Bayer.

It is recommended to use the dip treatments according to specific conditions of dip time, drying time and drying temperature and so on, in order to obtain the best possible performance from the treatment systems.

It is also recommended that the fibre be immersed in the primer solution for between 1 and 300 seconds, and preferably for between 60 and 300 seconds; drying of the dipped fibre is recommended at between 100 and 250 °C for between 60 and 300 seconds.

It is recommended that the RFL, or the RFL containing a 'primer' additive as a bonding promoter, be used to treat the fibre for between 1 and 300 seconds; drying conditions are recommended as being 2-3 minutes at 200-250 °C if the fibre was pretreated with primer; drying conditions are recommended as being 1-5 minutes at 100-150 °C followed by 2-3 minutes at 200-250 °C if the fibre was dipped into the RFL containing a bonding promoter additive.

Finally, the treated fibre can be further treated using a cement solution. It is recommended that the immersion time for this stage be in the range 1-60 seconds, and preferably in the range 1-20 seconds. Drying conditions for this treatment are recommended as being in the range 100-150 °C for 1-5 minutes, where the choice of drying temperature is lower than the deblocking temperature of the blocked isocyanate component of the cement treatment. This completes the treatment of the fibre.

Bonding of the treated fibre (fibre, fabric, cord, mat and so on) is recommended to be carried out according to conventional means familiar to those skilled in the art. In essence this consists of placing the treated fibre in intimate contact with the elastomer component of the reinforced composite under construction, and under conditions of elevated temperature and pressure effecting a vulcanisation reaction of the elastomer during which the fibres are bonded to the elastomer. It is preferable that the vulcanisation temperature is such that it is greater than the deblocking temperature of the blocked isocyanate of the cement treatment, in order to bring about the deblocking reaction and hence to maximise the bonding potential of the treated fibre. The actual conditions of vulcanisation are dictated largely by the type of elastomer used in the composite.

Fibre-reinforced elastomeric artefacts constructed in such a way as has been described, possess excellent fibre-to-rubber bonding characteristics. Artefacts prepared in such a manner may include, but need not be limited to, high performance power transmission belts, conveyor belts, hoses and vehicle tyres. For example, artefacts prepared according to the present invention are found to perform well at elevated temperatures like those encountered in aggressive environments such as vehicle engine bays.

Furthermore, the present invention provides a method and composition for bonding fibres to rubbers that avoids the use of epoxies as primers; a feature that is welcomed by the Industry.

### EXAMPLES

### Example 1

Aromatic polyamide fabric, measuring 2x8 inches, was dipped into a primer comprising a 50:50 blend of *ca*. 20% solids Casabond E (a condensate of resorcinol, formaldehyde and 4-chlorophenol manufactured by Thomas Swan & Co. Ltd) and *ca*. 20% solids Lithene YS501 (a ring-opened, maleinised polybutadiene, also known as Lithene N4-5000: 25MA HE AQ, manufactured by Synthomer Ltd.). The primed fabric was dried for 5 minutes at 120 °C.

The fabric was then treated with a resorcinol/formalin/latex solution comprised as follows and being referred to hereafter as the HNBR RFL solution: 10 parts resorcinol; 6.8 parts 40% formalin; 237.2 parts HNBR latex (Chemisat LCH-7335X); 184 parts water. The fabric was then dried at 200 °C for 2 minutes.

The fabric was then treated with a cement solution composed of 10 parts chlorinated rubber (Pergut S10, Bayer); 10 parts butanone oxime blocked oligomeric 4,4'-diisocyanatodiphenyl methane (Thomas Swan R & D); 40 parts toluene; and 40 parts methyl ethyl ketone. Following immersion in the cement the treated fabric was dried in an oven for 2 minutes at 120 °C.

The fabric was cut into two 1x8 inch strips that were placed in intimate contact with unvulcanised HNBR compound to form a fabric-rubber-fabric composite. This layered structure was cured at 153 °C for 35 minutes to provide a test-specimen measuring 6x1x0.25 inches in the rubber/fabric central section and having 1-inch overhangs of fabric at the ends to facilitate tensile testing.

Room temperature tensile-testing was performed (180° angle, 100 mm min⁻¹ cross-head) to determine the fabric-to-rubber bond-strength. The results are provided in Table 1.

**Table 1. Example 1 Tensile Testing Results.**

| | |
|---|---|
| Maximum Bond-strength / N. per Inch Width | 607 |
| Average Bond-strength / N. per Inch Width | 544 |
| Failure Mode | Totally Cohesive Failure / Rubber Tear |

### Examples 2-4

Aromatic polyamide fabric of the form described in Example 1 was dipped into a range of primers comprising different blends of *ca*. 20% solids Casabond E (Thomas Swan & Co. Ltd) and *ca*. 20% solids Lithene YS501 (Synthomer Ltd.). The primed fabric pieces were dried for 5 minutes at 120 °C.

Each piece of fabric was then treated with the RFL of Example 1, being dried in the manner described in the earlier example and subsequently treated with the cement of Example 1, being dried in the manner described in that example.

The fabric pieces were cut into two 1x8-inch strips that were placed in intimate contact with unvulcanised HNBR compound to form fabric-rubber-fabric composites. Curing was as per Example 1.

Room temperature tensile-testing was performed as per Example 1 to give the results reported in Table 2.

**Table 2. Examples 2-4 Tensile Testing Results.**

| Casabond E Content of Primer | Example 2 (20%) | Example 3 (35%) | Example 4 (50%) |
|---|---|---|---|
| Max. Bond-strength / N. per Inch Width | 87 | 864 | 777 |
| Ave. Bond-strength / N. per Inch Width | 40 | 371 | 410 |
| Failure Mode | Partly Cohesive | Totally Cohesive | Partly Cohesive |

### Examples 5 and 6

For Examples 5 and 6, aromatic polyamide fabric samples of the form described in Example 1 were dipped into a range of primers comprising 50:50 blends of Casabond E (Thomas Swan & Co. Ltd) and the water-based PBD Derivatives (Examples 5 and 6, respectively) listed in Table 3, below.

**TABLE 3:**

| | PBD Backbone Molecular Weight | Degree of Maleinisation | Pendent Ester Group | Amine Used to Form Salt |
|---|---|---|---|---|
| Example 5 | 5000 | 20 wt% | Butanol | Ethanolamine |
| Example 6 | 5000 | 20 wt% | Butanol | Ammonia |

The primed fabric pieces were dried for 5 minutes at 120 °C. Each piece of fabric was then treated with the RFL of Example 1, being dried in the manner described in the earlier example and subsequently treated with the cement of Example 1, being dried in the manner described in that example.

The fabric pieces were cut into two 1x8-inch strips that were placed in intimate contact with unvulcanised HNBR compound to form fabric-rubber-fabric composites. Curing was as per Example 1.

Room temperature tensile-testing was performed as per Example 1 to give the results reported in Table 4.

**Table 4. Examples 5 and 6 Tensile Testing Results.**

| PBD Derivative in Primer | Example 5 | Example 6 |
|---|---|---|
| Max. Bond-strength / N. per Inch Width | 352 | 777 |
| Ave. Bond-strength / N. per Inch Width | 240 | 410 |
| Failure Mode | Partly Cohesive | Partly Cohesive |

### Examples 7-9

For Examples 7 to 9, respectively, aromatic polyamide fabric samples of the form described in Example 1 were dipped into the primer described in Example 1. The immersion time of the fabric in the primer was varied as described in Table 5 below.

**TABLE 5:**

| | **Fabric Immersion Time In Primer / minutes** |
|---|---|
| **Example 7** | 1 |
| **Example 8** | 3 |
| **Example 9** | 5 |

The primed fabric pieces were dried for 5 minutes at 120 °C. Each piece of fabric was then treated with the RFL of Example 1, being dried in the manner described in the earlier example and subsequently treated with the cement of Example 1, being dried in the manner described in that particular example.

The fabric pieces were cut into two 1x8-inch strips that were placed in intimate contact with unvulcanised HNBR compound to form fabric-rubber-fabric composites. Curing was as per Example 1.

Room temperature tensile-testing was performed as per Example 1 to give the results reported in Table 6.

**Table 6. Examples 7-9 Tensile Testing Results.**

| **Example** | **7** | **8** | **9** |
|---|---|---|---|
| **Max. Bond-strength / N. per Inch Width** | 623 | 326 | 598 |
| **Ave. Bond-strength / N. per Inch Width** | 425 | 189 | 383 |
| **Failure Mode** | Mainly Cohesive | Partly Cohesive | Partly Cohesive |

### Examples 10-12

For Examples 10 to 12, respectively, aromatic polyamide fabric samples of the form described in Example 1 were dipped into the primer described in Example 1, namely a blend of a phenolic derivative and a PBD derivative. The immersion time of the fabric in the primer was maintained at 5 minutes for all three examples in question.

**TABLE 7:**

| | **Fabric Drying Conditions (Dipped In Primer)** |
|---|---|
| **Example 10** | 2 mins @ 120 °C |
| **Example 11** | 5 mins @ 120 °C |
| **Example 12** | 2 mins @ 200 °C |

The drying conditions for the dipped fabric was varied as described in Table 7 above. Each piece of fabric was then treated with the RFL of Example 1, being dried in the manner described in the earlier example and subsequently treated with the cement of Example 1, being dried in the manner described in that particular example.

The fabric pieces were cut into two 1x8-inch strips that were placed in intimate contact with unvulcanised HNBR compound to form fabric-rubber-fabric composites. Curing was as per Example 1.

Room temperature tensile-testing was performed as per Example 1 to give the results reported in Table 8.

**Table 8. Examples 10-12 Tensile Testing Results.**

| **Example** | **10** | **11** | **12** |
|---|---|---|---|
| **Max. Bond-strength / N. per Inch Width** | 642 | 712 | 533 |
| **Ave. Bond-strength / N. per Inch Width** | 418 | 492 | 341 |
| **Failure Mode** | Mainly Cohesive | Totally Cohesive | Partly Cohesive |

### Examples 13-15

For Examples 13 to 15, respectively, aromatic polyamide fabric samples of the form described in Example 1 were treated with one of three primers based on that described in Example 1, namely a blend of a phenolic derivative and a PBD derivative. The three primers of the present examples varied according to their overall concentration in an aqueous medium, as described in Table 9 below:

**TABLE 9:**

| | **Primer Concentration (wt% solids)** |
|---|---|
| **Example 13** | 37 |
| **Example 14** | 20 |
| **Example 15** | 15 |

The drying conditions for the three examples were standardised at 5 minutes at 120 °C. Each piece of fabric was then treated with the RFL of Example 1, being dried in the manner described in the earlier example and subsequently treated with the cement of Example 1, being dried in the manner described in that particular example.

The fabric pieces were cut into two 1x8-inch strips that were placed in intimate contact with unvulcanised HNBR compound to form fabric-rubber-fabric composites. Curing was as per Example 1.

Room temperature tensile-testing was performed as per Example 1 to give the results reported in Table 10.

**Table 10. Examples 13-15 Tensile Testing Results.**

| **Example** | **13** | **14** | **15** |
|---|---|---|---|
| **Max. Bond-strength / N. per Inch Width** | 449 | 705 | 748 |
| **Ave. Bond-strength / N**. **per Inch Width** | 261 | 483 | 520 |
| **Failure Mode** | Partly Cohesive | Mainly Cohesive | Mainly Cohesive |

### Examples 16-18

For Examples 16 to 18, respectively, polyester or aromatic polyamide fabric samples of the form described in Example 1 were treated with the bonding agents listed in the table below, whereby the bonding agents were used as an additive to an RFL treatment. The RFL treatment used for the aramid in Example 16 was as per Example 1. The vinyl-pyridine- (VP) based RFL, hereafter referred to as "VP-RFL", was used for the polyester and nylon in Examples 17 and 18 and was prepared according to standard procedures using the following composition: 33.0pbw resorcinol, 48.6pbw 37% formaldehyde solution, 2.8pbw 32% sodium hydroxide solution, 732.0pbw Pliocord VP latex (Goodyear), 893.6pbw water and 28.8pbw 33% ammonium hydroxide solution.

**TABLE 11: Fabric Treatment Details**

| | **Fabric** | **Initial Primer Treatment** | **RFL Treatment 1** | **RFL treatment 2** | **Cement Treatment** |
|---|---|---|---|---|---|
| **16** | Aramid | None | 20 pbw Primer as per Example 1 in 80 pbw RFL as per Example 1 | None | As per Example 1 Cement |
| **17** | Polyester | None | 702 pbw Primer as per Example 1 in 1000 pbw VP-RFL | VP-RFL | None |
| **18** | Nylon | None | 100 pbw Primer as per Example 1 in 100 pbw VP-RFL | VP-RFL | None |

The dipping and drying conditions for the three examples were in accordance with conditions used by those familiar with the art. Following treatment the fabric pieces were cut into two 1x8-inch strips that were placed in intimate contact with unvulcanised rubber as described in the table below and cured to form fabric-rubber-fabric composites using the conditions appropriate for the type of rubber. The HNBR used was as per Example 1; the styrene butadiene rubber compound (SBR, grade 142S) was supplied by RAPRA.

Room temperature tensile-testing was performed as per Example 1 to give the results reported in Table 12.

**Table 12. Examples 16-18 Tensile Testing Results.**

| **Example** | **16** | **17** | **18** |
|---|---|---|---|
| **Rubber the Fabric was Cured Onto** | HNBR | SBR | SBR |
| **Max. Bond-strength / N. per Inch Width** | 668 | 571 | 461 |
| **Ave. Bond-strength / N. per Inch Width** | 386 | 431 | 243 |
| **Failure Mode** | Mainly Cohesive | Some Fibres Retained in Rubber | Partial Fabric Failure |

### Example 19

For Example 19, aromatic polyamide fabric samples of the form described in Example 1 were treated with the bonding agents listed in the table below. The bonding agents were applied in a manner standard to those familiar with the art.

The primer for Example 19 was composed of the following materials: a 1:1 (solids) mixture comprising a solution of a modified, maleinised polybutadiene and a phenolic derivative.

The modified, maleinised polybutadiene consisted of the *iso*-butyl mono-ester of a maleinised polybutadiene which has an original number average molecular weight (Mn) of between 4000 and 5000 and was maleinised to 20 wt%.

The phenolic derivative consisted of the condensate of a mixture of 37% formaldehyde solution, resorcinol and 4-chlorophenol in the ratio 735:650:616 by weight. Following appropriate processing to obtain a dry product the condensate was dissolved to form a solution in methyl ethyl ketone and toluene.

The RFL treatment used for the current example was as per Example 1 (HNBR-RFL). The cement used was as per Example 1.

**TABLE 13: Fabric Treatment Details**

| | **Fabric** | **Primer Treatment** | **RFL Treatment** | **Cement Treatment** |
|---|---|---|---|---|
| **Example 19** | Aramid | Phenolic Derivative and PBD Derivative in Methyl Ethyl Ketone / Toluene | HNBR-RFL as per Example 1 | As per Example 1 Cement |

The dipping, drying and curing conditions, onto HNBR compound, were in accordance with conditions used by those familiar with the art.

Following treatment the fabric pieces were cut into two 1x8-inch strips that were placed in intimate contact with unvulcanised HNBR as per Example 1 and cured to form fabric-rubber-fabric composites. Room temperature tensile-testing was performed as per Example 1 to give the results reported in Table 14.

**Table 14. Example 19 Tensile Testing Results.**

| **Example** | **19** |
|---|---|
| **Max. Bond-strength / N. per Inch Width** | 496 |
| **Ave. Bond-strength / N. per Inch Width** | 293 |
| **Failure Mode** | Partial Cohesive Failure |

## Claims

1. A method for the bonding of fibres to rubber, which comprises:
(a) treating the fibres with a primer;
(b) treating the fibres with a resorcinol/formalin/latex preparation;
(c) curing the rubber in intimate contact with the treated fibres,
wherein the primer comprises a ring-opened, maleinised polybutadiene and a phenolic derivative comprising electron-withdrawing groups.

2. A method according to Claim 1, wherein the primer is used separately prior to the resorcinol/formalin/latex treatment.

3. A method according to Claim 1, wherein the primer is used as a bonding promoter additive in the resorcinol/formalin/latex preparation.

4. A method according to any preceding claim, wherein the fibres are treated with the resorcinol/formalin/latex preparation more than once.

5. A method according to any preceding claim, wherein the fibres are dipped into the primer for 1-300 seconds, preferably 60-300 seconds.

6. A method according to Claim 5, wherein the fibres are dried at 100-250 °C for 60-300 seconds following dipping into the primer.

7. A method according to any preceding claim, wherein the fibres are dipped into the resorcinol/formalin/latex preparation for 1-300 seconds.

8. A method according to claim 7 when dependent on Claim 2, wherein the fibres are dried at 200-250 °C for 2-3 minutes.

9. A method according to Claim 7 when dependent on Claim 3, wherein the fibres are dried at 100-150 °C for 1-5 minutes followed by drying at 200-250 °C for 2-3 minutes.

10. A method according to any preceding claim, wherein a cement treatment is performed following the treatment of the fibres with the primer and the resorcinol/formalin/latex preparation.

11. A method according to Claim 10, wherein the cement comprises a blend of a blocked isocyanate preferably butanone oxime blocked oligomeric 4,4'-diisocyanatodiphenyl methane, and a chlorinated rubber preferably chlorinated polyisoprene, in methyl ethyl ketone.

12. A method according to Claim 10 or 11, wherein the fibres are dipped into the cement for 1-60 seconds, preferably 1-20 seconds.

13. A method according to Claim 12, wherein the fibres are dried at 100-150 °C for 1-5 minutes following dipping into the cement.

14. A method according to any preceding claim, wherein the fibres are aramid fibres and the rubber is hydrogenated nitrile rubber.

15. A method according to any of Claims 1 to 13, wherein the fibres are polyester or nylon.

16. A method according to any of Claims 1 to 13 or 15, wherein the rubber is styrene butadiene rubber or Standard Malaysian rubber.

17. Use of a method according to any preceding claim to produce a power transmission belt, a conveyor belt, a hose, or a vehicle tyre.

18. A composition for use as a primer, comprising:
a ring-opened, maleinised polybutadiene; and
a phenolic derivative comprising electron-withdrawing groups.

19. A composition according to Claim 18, wherein the maleinised polybutadiene is a half-ester derivative, preferably the isobutyl half-ester derivative of maleic anhydride adducts of polybutadiene.

20. A composition according to Claim 18, wherein the maleinised polybutadiene is a diacid.

21. A composition according to any of Claims 18 to 20, formed in aqueous solution, preferably comprising distilled (deionised) water containing an alkaline hydroxide solution.

22. A composition according to Claim 21, wherein the aqueous solution comprises ammoniated or aminated water.

23. A composition according to any of Claims 18 to 20, formed in organic solution, preferably comprising toluene, xylene or benzene.

24. A composition according to Claim 23, wherein the organic solution further comprises a polar solvent, preferably acetone or methyl ethyl ketone.

25. A composition according to any of Claims 18 to 24, wherein the phenolic derivative is halogenated, and is preferably 4-chlorophenol or 4-bromophenol.

26. A composition according to Claim 25, wherein the phenolic derivative is the resorcinol/formaldehyde condensate, or the ethoxylated resorcinol/formaldehyde condensate, of the halogenated phenolic derivative.

27. A composition according to any of Claims 18 to 26, wherein the weight ratio of ring-opened, maleinised polybutadiene to phenolic derivative comprising electron-withdrawing groups is in the range 1:19 to 19:1.

28. Use of a composition according to any of Claims 18 to 27 to produce a power transmission belt, a conveyor belt, a hose, or a vehicle tyre.

29. A composition for use in bonding fibres to rubber, comprising:
a composition according to any of Claims 18 to 27 in combination with a resorcinol/formalin/latex preparation.

30. Use of a composition according to Claim 29 to produce a power transmission belt, a conveyor belt, a hose, or a vehicle tyre.

31. A method according to any of Claims 1 to 16, using a composition according to any of Claims 19 to 27.

## Patentansprüche

1. Verfahren zur Bindung von Fasern an Kautschuk, welches umfaßt:
(a) Behandeln der Fasern mit einem Grundiermittel;
(b) Behandeln der Fasern mit einer Resorcinol/Formalin/Latex-Zubereitung;
(c) Härten des Kautschuks in innigem Kontakt mit den behandelten Fasern,
wobei das Grundiermittel ein ring-geöffnetes, maleiniertes Polybutadien und ein phenolisches Derivat umfassend Elektronen-ziehende Gruppen umfaßt.

2. Verfahren nach Anspruch 1, wobei das Grundiermittel getrennt vor der Resoreinol/Formalin/Latex-Behandlung verwendet wird.

3. Verfahren nach Anspruch 1, wobei das Grundiermittel als ein Bindungsförderungsadditiv in der Resorcinol/Formalin/Latex-Zubereitung verwendet wird.

4. Verfahren nach einem der vorangehenden Ansprüche, wobei die Fasern mit der Resorcinol/Formalin/Latex-Zubereitung mehr als einmal behandelt werden.

5. Verfahren nach einem der vorangehenden Ansprüche, wobei die Fasern in dem Grundiermittel für 1-300 Sekunden, bevorzugt 60-300 Sekunden eingetaucht werden.

6. Verfahren nach Anspruch 5, wobei die Fasern bei 100-250°C für 60-300 Sekunden folgend dem Eintauchen in das Grundiermittel getrocknet werden.

7. Verfahren nach einem der vorangehenden Ansprüche, wobei die Fasern in die Resorcinol/Formalin/Latex-Zubereitung für 1-300 Sekunden eingetaucht werden.

8. Verfahren nach Anspruch 7, wenn er von Anspruch 2 abhängig ist, wobei die Fasern bei 200-250°C für 2-3 Minuten getrocknet werden.

9. Verfahren nach Anspruch 7, wenn er von Anspruch 3 abhängig ist, wobei die Fasern bei 100-150°C für 1-5 Minuten getrocknet werden, gefolgt von einem Trocknen bei 200-250°C für 2-3 Minuten.

10. Verfahren nach einem der vorangehenden Ansprüche, wobei eine Bindemittelbehandlung folgend der Behandlung der Fasern mit dem Grundiermittel und der Resorcinol/Formalin/Latex-Zubereitung durchgeführt wird.

11. Verfahren nach Anspruch 10, wobei das Bindemittel eine Mischung eines Block-Isocyanats, bevorzugt mit Butanonoxim blockiertes, oligomeres 4,4'-Diisocyanatodiphenylmethan, und eines chlorierten Katuschuks, bevorzugt chloriertes Polyisopren, in Methylethylketon umfaßt.

12. Verfahren nach Anspruch 10 oder 11, wobei die Fasern in das Bindemittel für 1-60 Sekunden, bevorzugt 1-20 Sekunden eingetaucht werden.

13. Verfahren nach Anspruch 12, wobei die Fasern bei 100-150°C für 1-5 Minuten folgend dem Eintauchen in das Bindemittel getrocknet werden.

14. Verfahren nach einem der vorangehenden Ansprüche, wobei die Fasern Aramidfasern sind und der Kautschuk hydrierter Nitrilkautschuk ist.

15. Verfahren nach einem der Ansprüche 1 bis 13, wobei die Fasern Polyester oder Nylon sind.

16. Verfahren nach einem der Ansprüche 1 bis 13 oder 15, wobei der Kautschuk Styrol-Butadien-Kautschuk oder Standard-Malaysia-Kautschuk ist.

17. Verwendung eines Verfahrens nach einem der vorangehenden Ansprüche, um ein Energieübertragungsband, ein Förderband, einen Schlauch oder einen Fahrzeugreifen herzustellen.

18. Zusammensetzung zur Verwendung als ein Grundiermittel, welche umfaßt:
ein ring-geöffnetes, maleinisiertes Polybutadien; und
ein phenolisches Derivat umfassend Elektronen-ziehende Gruppen.

19. Zusammensetzung nach Anspruch 18, wobei das maleinisierte Polybutadien ein Halbesterderivat ist, bevorzugt das Isobutyl-Halbesterderivat von Maleinsäureanhydridaddukten von Polybutadien.

20. Zusammensetzung nach Anspruch 18, wobei das maleinisierte Polybutadien eine Disäure ist.

21. Zusammensetzung nach einem der Ansprüche 18 bis 20, gebildet in wäßriger Lösung, bevorzugt umfassend destilliertes (deionisiertes) Wasser enthaltend eine Alkalihydroxidlösung.

22. Zusammensetzung nach Anspruch 21, wobei die wäßrige Lösung ammonisiertes oder aminiertes Wasser umfaßt.

23. Zusammensetzung nach einem der Ansprüche 18 bis 20, gebildet in organischer Lösung, bevorzugt umfassend Toluol, Xylol oder Benzol.

24. Zusammensetzung nach Anspruch 23, wobei die organische Lösung ferner ein polares Lösungsmittel umfaßt, bevorzugt Aceton oder Methylethylketon.

25. Zusammensetzung nach einem der Ansprüche 18 bis 24, wobei das phenolische Derivat halogeniert ist und bevorzugt 4-Chlorphenol oder 4-Bromphenol ist.

26. Zusammensetzung nach Anspruch 25, wobei das phenolische Derivat das Resorcinol/Formaldehyd-Kondensat oder das ethoxylierte Resorcinol/Forrnaldehyd-Kondensat des halogenierten phenolischen Derivats ist.

27. Zusammensetzung nach einem der Ansprüche 18 bis 26, wobei das Gewichtsverhältnis des ringgeöffneten, maleinisierten Polybutadiens zum phenolischen Derivat umfassend Elektronen-ziehende Gruppen im Bereich 1:19 bis 19:1 liegt.

28. Verwendung einer Zusammensetzung nach einem der Ansprüche 18 bis 27, um ein Energieübertragungsband, ein Förderband, einen Schlauch oder einen Fahrzeugreifen herzustellen.

29. Zusammensetzung zur Verwendung zur Bindung von Fasern an Kautschuk, welche umfaßt:
eine Zusammensetzung nach einem der Ansprüche 18 bis 27 in Kombination mit einer Resozcinol/Formalin/Latex-Zubereitung.

30. Verwendung einer Zusammensetzung nach Anspruch 29, um ein Energieübertragungsband, ein Förderband, einen Schlauch oder einen Fahrzeugreifen herzustellen.

31. Verfahren nach einem der Ansprüche 1 bis 16 unter Verwendung einer Zusammensetzung nach einem der Ansprüche 19 bis 27.

## Revendications

1. Procédé permettant de lier des fibres à du caoutchouc, lequel comprend :
(a) le traitement des fibres avec un primaire ;
(b) le traitement des fibres avec une préparation de résorcinol, de formaline et de latex ;
(c) la vulcanisation du caoutchouc en contact étroit avec les fibres traitées,
dans lequel le primaire comprend un polybutadiène maléinisé à cycle ouvert et un dérivé phénolique comprenant des groupes électroattracteurs.

2. Procédé selon la revendication 1, dans lequel le primaire est utilisé séparément préalablement au traitement avec le résorcinol, la formaline et le latex.

3. Procédé selon la revendication 1, dans lequel le primaire est utilisé comme additif promoteur de liaison dans la préparation de résorcinol, de formaline et de latex.

4. Procédé selon l'une quelconque des revendications précédentes, dans lequel les fibres sont traitées avec la préparation de résorcinol, de formaldéhyde et de latex plus d'une fois.

5. Procédé selon l'une quelconque des revendications précédentes, dans lequel les fibres sont plongées dans le primaire pendant 1 à 300 secondes, de préférence pendant 60 à 300 secondes.

6. Procédé selon la revendication 5, dans lequel les fibres sont séchées à une température allant de 100 à 250°C pendant 60 à 300 secondes après immersion dans le primaire.

7. Procédé selon l'une quelconque des revendications précédentes, dans lequel les fibres sont plongées dans la préparation de résorcinol, de formaline et de latex pendant 1 à 300 secondes.

8. Procédé selon la revendication 7 lorsqu'il dépend de la revendication 2, dans lequel les fibres sont séchées à une température allant de 200 à 250°C pendant 2 à 3 minutes.

9. Procédé selon la revendication 7 lorsqu'il dépend de la revendication 3, dans lequel les fibres sont séchées à une température allant de 100 à 150°C pendant 1 à 5 minutes puis sont séchées à une température allant de 200 à 250°C pendant 2 à 3 minutes.

10. Procédé selon l'une quelconque des revendications précédentes, dans lequel un traitement adhésif est effectué après le traitement des fibres avec le primaire et la préparation de résorcinol, de formaline et de latex.

11. Procédé selon la revendication 10, dans lequel la colle comprend un mélange d'un isocyanate en bloc, de préférence du 4,4'-diisocyanatodiphényl méthane oligomère séquencé avec le butanone oxime et d'un caoutchouc chloré, de préférence le polyisoprène chloré, dans de la méthyl éthyl cétone.

12. Procédé selon la revendication 10 ou 11, dans lequel les fibres sont plongées dans la colle pendant 1 à 60 secondes, de préférence pendant 1 à 20 secondes.

13. Procédé selon la revendication 12, dans lequel les fibres sont séchées à une température allant de 100 à 150°C pendant 1 à 5 minutes après le plongeon dans la colle.

14. Procédé selon l'une quelconque des revendications précédentes, dans lequel les fibres sont des fibres aramides et le caoutchouc est un caoutchouc nitrile hydrogéné.

15. Procédé selon l'une quelconque des revendications 1 à 13, dans lequel les fibres sont du polyester ou du nylon.

16. Procédé selon l'une quelconque des revendications 13 ou 15, dans lequel le caoutchouc est du caoutchouc styrène-butadiène ou du caoutchouc de Malaisie standard.

17. Utilisation d'un procédé selon l'une quelconque des revendications précédentes pour produire une courroie de transmission de puissance, une courroie transporteuse, un flexible ou un pneu de véhicule.

18. Composition destinée à être utilisée comme primaire, comprenant :
■ un polybutadiène maléinisé à cycle ouvert ; et
■ un dérivé phénolique comprenant des groupes électroattracteurs.

19. Composition selon la revendication 18, dans laquelle le polybutadiène maléinisé est un dérivé demi-ester, de préférence le dérivé demi-ester isobutylique des produits d'addition de l'anhydride maléique sur le polybutadiène.

20. Composition selon la revendication 18, dans laquelle le polybutadiène maléinisé est un diacide.

21. Composition selon l'une quelconque des revendications 18 à 20, formée en solution aqueuse, comprenant de préférence de l'eau distillée (déionisée) contenant une solution d'hydroxyde alcalin.

22. Composition selon la revendication 21, dans laquelle la solution aqueuse comprend de l'eau ammoniacée ou aminée.

23. Composition selon l'une quelconque des revendications 18 à 20, formée en solution organique, comprenant de préférence du toluène, du xylène ou du benzène.

24. Composition selon la revendication 23, dans laquelle la solution organique comprend en outre un solvant polaire, de préférence de l'acétone ou de la méthyl éthyl cétone.

25. Composition selon l'une quelconque des revendications 18 à 24, dans laquelle le dérivé phénolique est halogéné, et est de préférence le 4-chlorophénol ou le 4-bromophénol.

26. Composition selon la revendication 25, dans laquelle le dérivé phénolique est le condensat résorcinol/formaldéhyde, ou le condensat résorcinol éthoxylé/formaldéhyde, du dérivé phénolique halogéné.

27. Composition selon l'une quelconque des revendications 18 à 26, dans laquelle le rapport pondéral entre le polybutadiène maléinisé à cycle ouvert et le dérivé phénolique comprenant des groupes électroattracteurs est dans la gamme allant de 1/19 à 19/1.

28. Utilisation d'une composition selon l'une quelconque des revendications 18 à 27 pour produire une courroie de transmission de puissance, une courroie transporteuse, un flexible, ou un pneu de véhicule.

29. Composition destinée à être utilisée dans 1a liaison de fibres à du caoutchouc, comprenant :
* une composition selon l'une quelconque des revendications 18 à 27 en combinaison avec une préparation de résorcinol, de formaline et de latex.

30. Utilisation d'une composition selon la revendication 29 pour produire une courroie de transmission de puissance, une courroie transporteuse, un flexible, ou un pneu de véhicule.

31. Procédé selon l'une quelconque des revendications 1 à 16 utilisant une composition selon l'une quelconque des revendications 19 à 27.
